# EUROPÄISCHE PATENTANMELDUNG

(11) **EP 3 272 655 A1**
(43) Veröffentlichungstag der Anmeldung: **24.01.2018**
(21) Anmeldenummer: 16167847.9
(22) Anmeldetag: 02.05.2016
(51) Int. Cl.: B64F 1/28

(54) **STÜTZMAST ZUM ABSTÜTZEN VON ROHR- UND/ODER SCHLAUCHLEITUNGSANORDNUNGEN EINES FLUGZEUGBETANKUNGSSYSTEMS**

(30) Priorität: 04.05.2015 DE 102015106911
(71) Anmelder: Rohr Spezialfahrzeuge GmbH, 94315 Straubing (DE)
(72) Erfinder: Pfeiffer, Franz, 89165 Regglisweiler (DE)
(74) Vertreter: Glück Kritzenberger Patentanwälte PartGmbB

(57) **Zusammenfassung**

Beschrieben wird ein teleskopartig ausziehbarer Stützmast (1) zum Abstützen von Rohr- und/oder Schlauchleitungsanordnungen eines Flugzeugbetankungssystems. Der Stützmast umfasst wenigstens ein rohrförmiges erstes Stützmastelement (2) mit einer Wandung (2a) sowie zumindest ein im ersten Stützmastelement (2) axial entlang einer Hauptachse (HA) verschiebbar aufgenommenes rohrförmiges zweites, inneres Stützmastelement (3) und eine Verriegelungsvorrichtung (4). Die Stützmastelemente (2, 3) sind mittels der Verriegelungsvorrichtung (4) in einem wenigstens teilweise ausgezogenen Zustand gegeneinander arretierbar. Der Stützmast zeichnet sich insbesondere dadurch aus, dass die Verriegelungsvorrichtung (4) zumindest abschnittsweise in dem rohrförmigen zweiten, inneren Stützmastelement (3) angeordnet ist und dass die Verriegelungsvorrichtung (4) zumindest ein um eine Schwenkachse (SA) schwenkbar gelagertes Verriegelungselement (5) und ein Betätigungselement (6) aufweist. Zur gegenseitigen Arretierung der Stützmastelemente (2, 3) ist das in dem zweiten, inneren Stützmastelement (3) befestigte Verriegelungselement (5) mit der Wandung (2a) des ersten Stützmastelementes (2) in eine kraftschlüssige und/oder formschlüssige Wirkverbindung bringbar.

## Beschreibung

### Technisches Gebiet

Die Erfindung bezieht sich auf einen Stützmast zum Abstützen von Rohr- und/oder Schlauchleitungsanordnungen eines Flugzeugbetankungssystems.

### Stand der Technik

Verschiedene Vorrichtungen und Verfahren zur Flugzeugbetankung sind aus dem Stand der Technik bekannt, wobei die Betankung von Flugzeugen in der Regel mittels dafür vorgesehener Tankfahrzeuge oder so genannter Dispenserfahrzeuge erfolgt. Die Dispenserfahrzeuge verfügen häufig nicht über einen eigenen Tank, sondern weisen ein Schlauch- bzw. Rohrleitungssystem für den Anschluss an Hydranten einer unterirdisch am Flughafen vorhandenen Kerosinversorgung auf.

Unabhängig von der Art der Betankungsfahrzeuge, ist es erforderlich, über eine Rohr- bzw. Schlauchleitung eine sichere Verbindung zwischen dem Tankfahrzeug bzw. dem Hydranten der Kerosinversorgung und dem Flugzeugtank herzustellen. Gewöhnlich weist die Rohr- oder Schlauchleitung dazu an einem vorderen Ende eine Rohrleitungsanordnung mit Verbindungseinrichtung auf, welche beispielsweise aus scherenartig, gelenkig miteinander verbundenen Rohr- oder Schlauchelementen sowie den notwendigen Kupplungsstücken zur Verbindung mit den Flugzeugbetankungsstutzen besteht. Um diese Rohrleitungsanordnung mit Verbindungseinrichtung an die zur Betankung notwendige Position, insbesondere auf die notwendige Höhe zu bringen, sind meist Hubplattformen bzw. Hebebühnen vorgesehen, an denen die Rohrleitungsanordnung zunächst derart angebracht oder gekoppelt ist, dass sie durch Anheben der Hubplattform bzw. der Hebebühne passiv mitgenommen und richtig positioniert wird.

Zum Einleiten eines Betankungsvorganges verbindet ein Tankwart, der sich ebenfalls auf der Hebebühne befindet, nach dem Hub der Hebebühne in die Endstellung, die Kupplungsstücke mit den Flugzeugbetankungsstutzen. Vor Beginn des eigentlichen Betankungsvorganges muss die Hebebühne jedoch wieder abgesenkt werden, um den Betankungsvorgang einzuleiten und zu überwachen.

Ein grundlegendes Problem bei bekannten Flugzeugbetankungssystemen ist, dass durch das Absenken der Hebebühne vor Beginn des eigentlichen Betankungsvorganges enorme Kräfte auf die mit den Kupplungsstücken verbundenen Flugzeugbetankungsstutzen wirken, da allein das Gewicht bzw. die Schwerkraft der Rohr- oder Schlauchleitungen und der Rohrleitungsanordnung mit Verbindungseinrichtung eine starke Zugbelastung für die Flugzeugbetankungsstutzen darstellt.

Um diese hohen Zugbelastungen zu mindern, ist es notwendig, die Rohrleitungsanordnungen bzw. Verbindungseinrichtungen des Flugzeugbetankungssystems während des Betankungsvorganges abzustützen. Dazu können beispielsweise Stützmasten eingesetzt werden, die ausziehbar und in einem ausgezogenen Zustand arretierbar oder feststellbar sind. Solche Stützmasten sind aus diversen technischen Gebieten bekannt. Beispielsweise beschreibt die UK 2 237 546 A einen Stützmast für den Großbaum eines Segelschiffes, bei dem eine Arretierung mittels einer Zahnstange und einer Sperrklinke möglich ist.

Die DE 10 2010 007 144 A1 beschreibt beispielsweise einen auf dem Gebiet von Flugzeugbetankungssystemen eingesetzten teleskopartig ausziehbaren Stützmast zum Abstützen einer als Pantographen bezeichneten Verbindungseinrichtung oder Rohrleitungsanordnung. Die Verbindungseinrichtung ist dabei am Stützmast angeordnet und der Stützmast ist mitsamt der daran angeordneten Verbindungseinrichtung mittels einer Hebebühne passiv ausziehbar. Der Stützmast ist in einem teilweise oder ganz ausgezogenen Zustand mittels zumindest eines Bremsmechanismus fixierbar. Die Fixierung erfolgt über eine mit dem Stützmast verbundene, bewegbare Stützstange sowie zwei an die Stützstange anpressbare Bremsbacken.

Nachteilig ist bei dem Stützmast der DE 10 2010 007 144 A1 die Stützstange mit den damit angeordneten Bremsbacken als zusätzliches, neben dem Stützmast angeordnetes Element vorgesehen, welches einerseits zusätzlichen Platz bedarf und welches andererseits durch die leichte Zugänglichkeit auch vor Beschädigungen nicht sicher ist.

Trotz den aus dem Stand der Technik bekannten Lösungen gibt es daher einen Bedarf, den oberhalb beschriebenen Stützmast weiter zu entwickeln.

### Darstellung der Erfindung

Aufgabe der vorliegenden Erfindung ist es daher einen Stützmast zum Abstützen einer Rohr- und/oder Schlauchleitungsanordnungen eines Flugzeugbetankungssystems zur Verfügung zu stellen, der die Nachteile des Standes der Technik überwindet und der bei möglichst geringen Verschleiß und geringer Wartung eine hohe Zuverlässigkeit beim Abstützen der Rohr- und/oder Schlauchleitungsanordnungen aufweist. Diese Aufgabe wird erfindungsgemäß durch den Stützmast gemäß unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt einen teleskopartig ausziehbaren Stützmast zum Abstützen von Rohr- und/oder Schlauchleitungsanordnungen eines Flugzeugbetankungssystems zur Verfügung, wobei der Stützmast wenigstens ein rohrförmiges erstes Stützmastelement mit einer Wandung sowie zumindest ein im ersten Stützmastelement axial entlang einer Hauptachse verschiebbar aufgenommenes rohrförmiges zweites, inneres Stützmastelement und eine Verriegelungsvorrichtung aufweist. Die Stützmastelemente sind mittels der Verriegelungsvorrichtung in einem wenigstens teilweise ausgezogenen Zustand gegeneinander arretierbar. Der Stützmast zeichnet sich insbesondere dadurch aus, dass die Verriegelungsvorrichtung zumindest abschnittsweise in dem rohrförmigen zweiten, inneren Stützmastelement angeordnet ist und dass die Verriegelungsvorrichtung zumindest ein um eine Schwenkachse schwenkbar gelagertes Verriegelungselement und ein Betätigungselement aufweist, wobei zur gegenseitigen Arretierung der Stützmastelemente das in dem zweiten, inneren Stützmastelement befestigte Verriegelungselement mittels einer Verschwenkung um die Schwenkachse mit der Wandung des ersten Stützmastelementes eine kraftschlüssige und/oder formschlüssige Wirkverbindung ausbildet bzw. bringbar ist.

Bei dem erfindungsgemäßen teleskopartig ausziehbaren Stützmast, können die Stützmastelemente zur Verlängerung des Stützmastes in Richtung der Hauptachse derart gegeneinander bewegt werden, dass das im ersten Stützmastelement aufgenommene zweite, innere Stützmastelement teilweise aus dem ersten Stützmastelement herausgezogen bzw. herausgeschoben wird. Das zweite, innere Stützmastelement kann vorliegend daher auch als Auszugselement verstanden werden. In einem teilweise oder ganz ausgezogenen Zustand des Stützmastes bleibt das zweite, innere Stützmastelement daher lediglich abschnittsweise im ersten Stützmastelement aufgenommen. Die Stützmastelemente sind in einem ausgezogenen Zustand mittels der Verriegelungsvorrichtung gegeneinander arretierbar. Im Sinne der Erfindung ist darunter zu verstehen, dass der Stützmast in diesem ausgezogenen Zustand feststellbar oder fixierbar ist, das heißt, der ausgezogene Zustand des Stützmastes wird durch die gegenseitige Arretierung der Stützmastelemente sicher und zuverlässig aufrechterhalten.

Erfindungsgemäß ist die Verriegelungsvorrichtung zumindest abschnittsweise in dem rohrförmigen zweiten, inneren Stützmastelement angeordnet. Das in dem zweiten, inneren Stützmastelement befestigte Verriegelungselement bildet mit der Wandung des ersten Stützmastelementes eine kraftschlüssige oder formschlüssige Wirkverbindung aus. Besonders vorteilhaft, ist die Verriegelungsvorrichtung durch die Anordnung in dem zweiten, inneren Stützmastelement, welches selbst wiederum axial verschiebbar im ersten Stützmastelement aufgenommen ist, im Wesentlichen im Inneren des rohrförmigen Stützmastes vorgesehen. Neben der vorteilhaft besonders platzsparenden Anordnungsweise bringt dies zusätzliche Vorteile mit sich, da insbesondere die beweglichen Teile der Verriegelungsvorrichtung sowie die zur Ausbildung der kraft- und oder formschlüssigen Wirkverbindung vorgesehenen Elemente im Wesentlichen von außen unzugänglich sind und daher geschützt und sicher vor äußeren Einflüssen, wie Verschmutzung oder mechanischer Beschädigung sind.

Der erfindungsgemäße teleskopartig ausziehbare Stützmast ist vorteilhafterweise an einem Betankungsfahrzeug, insbesondere an einem zur Flugzeugbetankung verwendeten Tankfahrzeug oder Dispenserfahrzeug angeordnet. Der Stützmast kann beispielsweise eine im Wesentlichen runde Querschnittsform aufweisen, wobei die rohrförmigen Stützmastelemente näherungsweise in Form von Rundrohren mit unterschiedlichen, aufeinander abgestimmten Durchmessern ausgebildet sind. Alternativ kann der Stützmast auch eine im Wesentlichen rechteckige, quadratische, dreieckige oder ovale Querschnittsform aufweisen. In diesen Ausführungsformen sind die Stützmastelemente wiederum in Form von Rohren der jeweiligen Querschnittsform mit unterschiedlichen, aufeinander abgestimmten Maßen ausgebildet.

Gemäß einer bevorzugten Ausführungsform der vorliegenden Erfindung ist zusätzlich ein rohrförmiges drittes, äußeres Stützmastelement vorgesehen, wobei das erste Stützmastelement in dem dritten, äußeren Stützmastelement axial entlang der Hauptachse verschiebbar aufgenommen ist. Bei dieser bevorzugten Ausführungsform umfasst der Stützmast drei Stützmastelemente, von denen zwei, nämlich das erste und das zweite, innere Stützmastelement ausziehbar sind und daher als Auszugselemente verstanden werden können. Vorteilhaft kann der Stützmast in dieser bevorzugten Ausführungsform beim Ausziehen eine größere Länge erreichen und einen größeren Höhenunterschied zwischen der Basis des Tankfahrzeugs bzw. der Fahrbahn und dem Ort der Flugzeugbetankung am Tragflügel des Flugzeugs überwinden, was besonders bei großen Flugzeugen vorteilhaft ist.

Insbesondere bevorzugt, ist bei Ausführungsformen mit einem dritten, äußeren Stützmastelement, zusätzlich eine Führungsvorrichtung vorgesehen. Die Führungsvorrichtung umfasst dabei wenigstens eine Umlenkrolle sowie ein um die Umlenkrolle geführtes, langgestrecktes, band- oder seilförmiges Führungselement. Das Führungselement ist an einem ersten Ende mit einem oberen Abschnitt des dritten, äußeren Stützmastelementes und an einem zweiten Ende mit einem unteren Abschnitt des zweiten, inneren Stützmastelementes verbunden und die Umlenkrolle ist an einem unteren Abschnitt des ersten Stützmastelementes befestigt. Vorteilhaft dient die Führungsvorrichtung dazu, dass beim Ausziehen des Stützmastes alle Auszugselemente, d. h. das erste und das zweite, innere Stützmastelement gleichzeitig und vor allem gleichermaßen ausgezogen bzw. ausgeschoben werden. Dies führt vorteilhaft zu einer höheren Stabilität des Stützmastes und zu einer geringeren Abnutzung der einzelnen Stützmastelemente.

Das langgestreckte, band- oder seilförmige Führungselement ist beispielsweise aus Metall, aus einem Kunststoff oder aus einem textilen Material hergestellt und kann in Form eines Bandes, eines Seiles oder einer Kette ausgebildet sein. Zur Verbindung des Führungselementes mit den Stützmastelementen können die Enden des Führungselementes zum Beispiel mit der Wandung der Stützmastelemente verschweißt oder mittels einer Schraubverbindung oder mittels Klammern oder Klemmen an den Stützmastelementen befestigt sein.

Gemäß einer bevorzugten Ausführungsform ist die Verriegelungsvorrichtung im unteren Abschnitt des zweiten, inneren Stützmastelementes angeordnet und befestigt, wobei der untere Abschnitt des zweiten, inneren Stützmastelementes sowohl im eingeschobenen, als auch im teilweise oder ganz ausgezogenen Zustand des Stützmasts im ersten Stützmastelement aufgenommen und von diesem hülsenartig umgeben ist.

Bevorzugt ist das schwenkbar gelagerte Verriegelungselement in Form eines Kipphebels mit einem über eine äußere Wandungsoberfläche einer Wandung des zweiten, inneren Stützmastelementes herausragenden Riegelabschnitt ausgebildet, wobei der Riegelabschnitt mit einer inneren Wandungsoberfläche der Wandung des ersten Stützmastelementes eine reibschlüssige Verbindung ausbildet oder formschlüssig in eine dafür vorgesehene Ausnehmung in der Wandung des ersten Stützmastelementes eingreift. Im Falle der formschlüssigen Verbindung kann durch mehrere entlang der Hauptachse des Stützmasts angeordnete Ausnehmungen in der Wandung des ersten Stützmastelementes, und insbesondere durch parallele Reihen von versetzt angeordneten Ausnehmungen beispielsweise zusätzlich in Kombination mit zwei oder mehreren nebeneinander angeordneten Verriegelungselementen und Betätigungselemente eine stufenlose gegenseitige Arretierung erreicht werden.

Um zu erreichen, dass der Riegelabschnitt über die äußere Wandungsoberfläche der Wandung des zweiten, inneren Stützmastelementes herausragt, kann beispielsweise in der Wandung des zweiten, inneren Stützmastelementes eine Durchbrechung vorgesehen sein, in die das Verriegelungselement im Bereich seines Riegelabschnittes derart eingreift, dass der Riegelabschnitt durch die Durchbrechung geführt ist und so über die äußere Wandungsoberfläche des zweiten, inneren Stützmastelementes hinausragt. In diesem Fall ist lediglich der Riegelabschnitt des Verriegelungselementes nicht im Inneren des zweiten, inneren Stützmastelementes angeordnet. Die Durchbrechung in der Wandung ist dabei in Form und Größe derart angepasst, dass der Riegelabschnitt in einem vorgegebenen Maße frei beweglich ist.

Besondere Vorteile ergeben sich darüber, dass das Betätigungselement der Verriegelungsvorrichtung in Form eines Aktuators, insbesondere in Form eines steuerbaren pneumatischen Zylinders ausgebildet ist. Beispielsweise steht ein beweglicher Kolben des pneumatischen Zylinders derart mit dem Verriegelungselement in Verbindung, dass das Verriegelungselement durch Ein- bzw. Ausfahren des Kolbens um die Schwenkachse verschwenkt wird. Bei einem als Kipphebel ausgebildeten Verriegelungsabschnitt steht der Kolben beispielsweise mit einem dem Riegelabschnitt gegenüberliegenden Endabschnitt des Kipphebels in Kontakt. Über geeignete Steuersysteme wird das Ein- und Ausfahren des Kolbens gesteuert. Beispielsweise kann die Entnahme oder Platzierung der Kupplungsstücke der Rohrleitungsanordnung des Flugzeugbetankungssystems ein Steuersignal für das Ein- und Ausfahren des Kolbens liefern, um das Verschwenken des Verriegelungselementes und dadurch schließlich die Arretierung des Stützmasts auszulösen.

Insbesondere bevorzugt ist ein separater Antrieb zum Ausziehen des Stützmastes nicht vorgesehen und der Stützmast ist passiv mittels einer Hebebühne ausziehbar. Ebenso bevorzugt ist das Verriegelungselement derart ausgebildet und eingerichtet, dass der Stützmast bis zu einem vorgegebenen maximalen Auszugszustand passiv ausziehbar ist, und zwar unabhängig von einer Ausschwenkposition des Verriegelungselementes. Besonders vorteilhaft kann der Stützmast in dieser Ausführungsform auch in einem arretierten Zustand bzw. im Verriegelungszustand weiter ausgezogen werden, da das Verriegelungselement bei Entlastung und gleichzeitiger, nach oben gerichteter Bewegung des zweiten Stützmastelementes so um die Schwenkachse bewegt werden kann, dass ein Mitschleppen des Verriegelungselementes nach oben hin beispielsweise unabhängig von der Position des Kolbens des pneumatischen Zylinders möglich ist, ein Einschieben bzw. Ineinanderschieben der Stützmastelemente jedoch wirksam verhindert wird.

Weiterhin bevorzugt ist an einem oberen Abschnitt des zweiten, inneren Stützmastelementes eine Haltevorrichtung für die Rohrleitungsanordnungen eines Flugzeugbetankungssystems vorgesehen. Am oberen Abschnitt des zweiten, inneren Stützmastelementes ist beispielsweise auch ein Verbindungsstück für den Eingriff der Hebebühne vorgesehen.

Für den Betankungsvorgang einer Flugzeugbetankung bringt der vorliegend beschriebene Stützmast große Vorteile mit sich. Beispielsweise wird der über eine Haltevorrichtung mit der Rohrleitungsanordnung in Verbindung stehende Stützmast zusammen mit den Rohrleitungsanordnungen mittels einer Hebebühne zum Tragflügel des Flugzeugs angehoben. Während dieses Anhebe- bzw. Ausziehvorganges liegt die vollständige Last auf der Hebebühne. Zum Verbinden der Rohrleitungsanordnung bzw. der Verbindungseinrichtung mit den Flugzeugbetankungsstutzen entnimmt ein ebenfalls auf der Hebebühne anwesender Tankwart die Kupplungsstücke aus ihrem Halter. Dadurch wird ein Steuersignal ausgegeben, wodurch letztlich die Stützmastelemente im ausgezogenen Zustand gegeneinander arretiert werden und der Stützmast selbsttätig die Abstützung der Rohrleitungsanordnung übernehmen und die Hebebühne nach unten fahren kann. Durch das Eigengewicht bzw. durch die Schwerkraft der Rohrleitungsanordnung und der Stützmastelemente ist gewährleistet, dass kein unbeabsichtigtes Lösen der Arretierung möglich ist.

Nach Abschluss des Betankungsvorganges fährt der Tankwart erneut mit der Hebebühne wieder zum Tragflügel des Flugzeugs, um die Verbindungen der Rohrleitungsanordnung mit den Flugzeugbetankungsstutzen zu lösen und die Arretierung der Stützmastelemente aufzuheben. Solange kein Steuersignal zur Lösung der Arretierung bzw. zur Entriegelung ausgegeben wird, kann das Verriegelungselement nach oben hin mitgeschleppt werden und der Stützmast weiter ausgezogen werden, so dass es unerheblich ist, ob die Hebebühne nach Beendigung des Betankungsvorgangs die Höhe des ausgezogenen Stützmasts genau erreicht oder ob sie höher angehoben wird. Um schließlich zum nicht arretierten Zustand des Stützmasts zurückzukehren, ist es zwangsweise erforderlich, dass der Stützmast durch Eingriff der Hebebühne entlastet und zunächst mittels der Hebebühne über einen vorgegebenen Hubweg nach oben mitgenommen wird, wodurch auch das Verriegelungselement entlastet wird und der Kolben des pneumatischen Zylinders in Reaktion auf ein ausgegebenes Steuersignal, beispielsweise durch Platzieren der Kupplungsstücke der Rohrleitungsanordnung in ihren Haltern, wieder ausgefahren werden kann. Das Verriegelungselement kehrt damit in seine auch als Ruheposition zu verstehende Ausgangsposition zurück und der Stützmast kann mit Hilfe der Hebebühne, auf welcher nun wieder die gesamte Last ruht, in die Ausgangsposition zurückgefahren werden.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig.1: eine schematische Ansicht einer Ausführungsform des erfindungsgemäßen Stützmastes;
- Fig. 2: eine schematische Ansicht einer weiteren Ausführungsform des erfindungsgemäßen Stützmastes;
- Fig. 3a: in einem Längsschnitt schematisch dargestellt einen Ausschnitt eines Stützmastes im Bereich der Verriegelungsvorrichtung im nicht arretierten Zustand,
- Fig. 3b: in einem Längsschnitt schematisch dargestellt den Ausschnitt des Stützmastes der Figur 3a im arretierten Zustand,
- Fig. 4a: in einem Längsschnitt schematisch dargestellt einen Ausschnitt einer weiteren Ausführungsform eines Stützmastes im Bereich der Verriegelungsvorrichtung im nicht arretierten Zustand,
- Fig. 4b: in einem Längsschnitt schematisch dargestellt den Ausschnitt des Stützmastes der Figur 4a im arretierten Zustand.

### Wege zur Ausführung der Erfindung

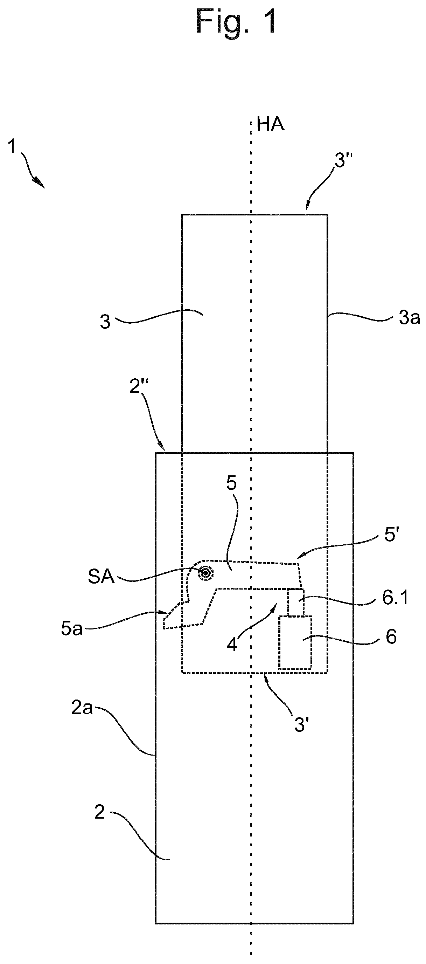

Figur 1 zeigt eine schematische Ansicht einer Ausführungsform des erfindungsgemäßen teleskopartig ausziehbaren Stützmastes 1, welcher im dargestellten Beispiel eine im Wesentlichen runde Querschnittsform aufweist. Der Stützmast 1 umfasst ein eine Wandung 2a aufweisendes, rohrförmiges erstes Stützmastelement 2, ein eine Wandung 3a aufweisendes, rohrförmiges zweites, inneres Stützmastelement 3 sowie eine Verriegelungsvorrichtung 4. Der Stützmast 1 weist u.a. nicht in den Figuren dargestellte Rohrleitungen, Drehgelenke, Schläuche und/oder Betankungskupplungen auf, wobei die Vorrichtung aus Stützmast 1 und weiteren der genannten Elemente auch als Pantograph bezeichnet wird.

Das in Form eines Rundrohres ausgebildete zweite, innere Stützmastelement 3 ist in dem ebenfalls in Form eines Rundrohres ausgebildeten ersten Stützmastelement 2 axial entlang einer Hauptachse HA des Stützmastes 1 verschiebbar aufgenommen. Dadurch kann der Stützmast 1 durch Ausziehen oder Ausschieben des zweiten, inneren Stützmastelementes 3 aus dem ersten Stützmastelement 2 in Richtung der Hauptachse HA verlängert werden. Im ausgezogenen Zustand sind die Stützmastelemente 2, 3 mittels der Verriegelungsvorrichtung 4 gegeneinander arretierbar, d.h. das zweite, innere Stützmastelement 3 kann mittels der Verriegelungsvorrichtung 4 derart gegenüber dem ersten Stützmastelement 2 fixiert oder festgelegt werden bzw. gegen das erste Stützmastelement 2 abgestützt werden, dass der ausgezogene Zustand des Stützmastes 1 zuverlässig und sicher beibehalten bleibt.

Die Verriegelungsvorrichtung 4 umfasst ein um eine Schwenkachse SA schwenkbar gelagertes Verriegelungselement 5 und ein Betätigungselement 6 und ist in einem unteren Abschnitt 3' in dem zweiten, inneren Stützmastelement 3 angeordnet. Das Verriegelungselement 5 ist im dargestellten Beispiel in Form eines Kipphebels ausgebildet und weist an einem freien Ende einen Riegelabschnitt 5a auf. Das Betätigungselement 6 ist im dargestellten Beispiel in Form eines steuerbaren pneumatischen Zylinders ausgebildet, wobei ein Kolben 6.1 des Zylinders 6 mit einem dem Riegelabschnitt 5a gegenüberliegenden Endabschnitt 5' des Verriegelungselementes 5 in Kontakt steht.

Zur gegenseitigen Arretierung der Stützmastelemente 2, 3 wird, vermittelt durch eine Kolbenbewegung des Kolbens 6.1, das in dem zweiten, inneren Stützmastelement 3 befestigte Verriegelungselement 5 um die Schwenkachse SA derart verschwenkt, dass der Riegelabschnitt 5a des Verriegelungselementes 5 mit der Wandung 2a des ersten Stützmastelementes 2 in eine kraftschlüssige oder formschlüssige Wirkverbindung treten kann.

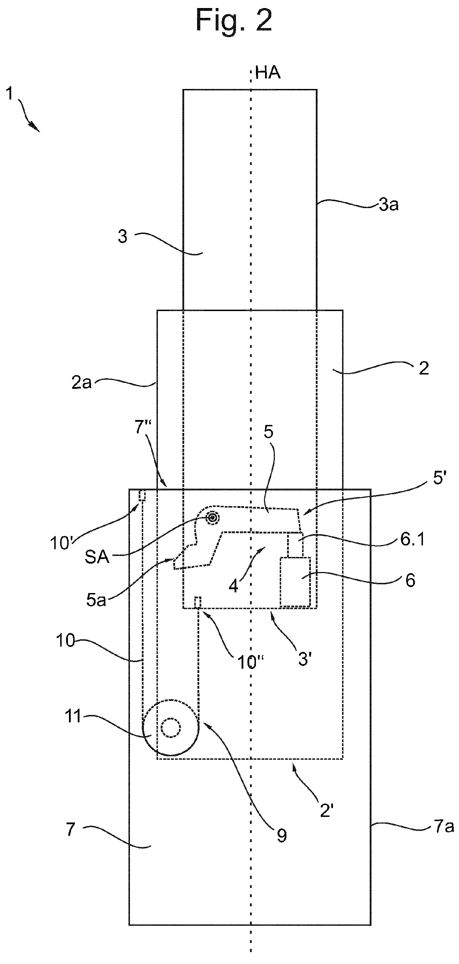

Figur 2 zeigt eine schematische Ansicht einer weiteren Ausführungsform des erfindungsgemäßen teleskopartig ausziehbaren Stützmastes 1, welcher ebenfalls eine im Wesentlichen runde Querschnittsform aufweist. Der Stützmast 1 umfasst zusätzlich zu dem rohrförmigen ersten Stützmastelement 2 und dem rohrförmigen zweiten, inneren Stützmastelement 3 ein drittes, äußeres Stützmastelement 7, wobei das dritte, äußere Stützmastelement 7 das erste Stützmastelement 2 hülsenartig umgibt und das erste Stützmastelement 2 somit in dem dritten, äußeren Stützmastelement 7 axial entlang der Hauptachse HA des Stützmastes 1 verschiebbar aufgenommen ist.

Der Stützmast 1 umfasst neben den drei teleskopartig ineinandergreifenden, verschiebbar angeordneten Stützmastelementen 2, 3, 7 und der Verriegelungsvorrichtung 4 zusätzlich eine Führungsvorrichtung 9. Die Führungsvorrichtung 9 weist eine Umlenkrolle 11 und ein in Form eines Metallbandes ausgebildetes, um die Umlenkrolle 11 geführtes Führungselement 10 auf. Das Führungselement 10 ist an einem ersten Ende 10' mit einem oberen Abschnitt 7" des dritten, äußeren Stützmastelementes 7 und mit einem zweiten Ende 10" mit einem unteren Abschnitt 3' des zweiten, inneren Stützmastelementes 7 verbunden. Die Umlenkrolle 11 ist an einem unteren Abschnitt 2' des ersten Stützmastelementes 2 befestigt. Das Führungselement 10 verbindet somit, geführt über die Umlenkrolle 11 am mittleren Stützmastelement 2, das äußere und das innere Stützmastelement 7, 3.

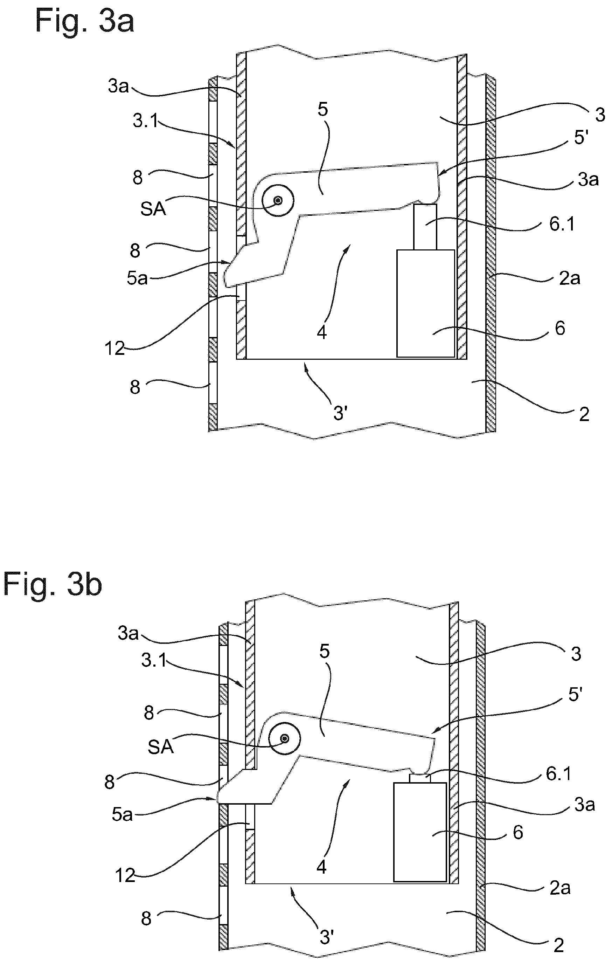

Durch die Führungsvorrichtung 9 kann einerseits sichergestellt werden, dass beim Ausziehen des Stützmastes 1 die Stützmastelemente 2, 3 gleichzeitig und gleichermaßen ausgezogen bzw. ausgeschoben werden, wodurch die Stabilität des Stützmastes 1 verbessert wird und die Belastungen der einzelnen Stützmastelemente 2, 3, 7 möglichst gering gehalten werden. Im arretierten Zustand des Stützmastes 1 vermittelt die Führungsvorrichtung 9 andererseits, dass bei einer gegenseitigen Arretierung des zweiten, inneren Stützmastelementes 3 und des ersten Stützmastelementes 2 gleichzeitig auch das erste Stützmastelement 2 gegenüber dem dritten, äußeren Stützmastelement 7 arretiert wird. In dieser bevorzugten Ausführungsform der Figur 3 kann das erste Stützmastelement 2 somit über die formschlüssige oder kraftschlüssige Wirkverbindung zwischen Verriegelungselement 5 und Wandung 2a gegen das zweite, innere Stützmastelement 3 und über das Führungselement 10 gegen das dritte, äußere Stützmastelement 7 fixiert werden.

Die Figuren 3a und 3b zeigen in einem Längsschnitt schematisch dargestellt einen Ausschnitt eines Stützmastes 1 im Bereich der Verriegelungsvorrichtung 4, wobei Figur 3a einen nicht arretierten Zustand bzw. Entriegelungszustand und Figur 3b einen arretierten Zustand bzw. Verriegelungszustand zeigt. Die Verriegelungsvorrichtung 4 umfassend das schwenkbar um die Schwenkachse SA gelagerte Verriegelungselement 5 und das als pneumatischer Zylinder ausgebildete Betätigungselement 6 mit beweglichem Kolben 6.1 ist in einem unteren Abschnitt 3' des zweiten, inneren Stützmastelementes 3 angeordnet und befestigt, wobei die Verriegelungsvorrichtung 4 größtenteils im Inneren des rohrförmigen zweiten, inneren Stützmastelementes 3 angeordnet ist. Lediglich der Riegelabschnitt 5a des Verriegelungselementes 5 ist nicht innerhalb des rohrförmigen zweiten, inneren Stützmastelementes 3 angeordnet, sondern greift in eine in der Wandung 3a des zweiten, inneren Stützmastelementes 3 vorgesehene, entsprechende Durchbrechung 12 ein und ragt über eine äußere Wandungsoberfläche 3.1 des zweiten, inneren Stützmastelementes 3 hinaus. Die Durchbrechung 12 ist dabei in Form und Größe darauf abgestimmt, dass der Riegelabschnitt 5a in einem vorgegebenen Maße innerhalb der Durchbrechung 12 frei beweglich ist.

Im nicht arretierten Zustand oder Entriegelungszustand der Figur 3a ist der Kolben 6.1 des als pneumatischer Zylinder ausgebildeten Betätigungselementes 6 ausgefahren. Da der Kolben 6.1 mit einem dem Riegelabschnitt 5a gegenüberliegenden Endabschnitt 5' des schwenkbar gelagerten Verriegelungselementes 5 in Kontakt steht ist das Verriegelungselement 5 bei ausgefahrenem Kolben 6.1 in einer derartigen Schwenkposition, dass der Riegelabschnitt 5a beabstandet von der Wandung 2a des ersten Stützmastelementes 2 angeordnet ist. Durch Einfahren des Kolbens 6.1 kann der arretierte Zustand bzw. Verriegelungszustand der Figur 3b herbeigeführt werden, wobei der dem Riegelabschnitt 5a gegenüberliegende Endabschnitt 5' des Verriegelungselementes 5 der Einfahrbewegung des Kolbens 6.1 folgt, so dass das Verriegelungselement 5 um die Schwenkachse SA derart verschwenkt wird, dass der Riegelabschnitt 5a in Richtung der Wandung 2a des ersten Stützmastelementes 2 bewegt wird. In Folge dieser Bewegung in Richtung der Wandung 2a greift der Riegelabschnitt 5a formschlüssig in eine dafür vorgesehene Ausnehmung 8 in der Wandung 2a ein. Die Ausbildung einer formschlüssigen Verbindung zwischen Rigelabschnitt 5a und Ausnehmung 8 wird vorliegend auch als Einklinken oder Einrasten verstanden. Allein das Eigengewicht bzw. die Schwerkraft des zweiten, inneren Stützmastelementes 3 zusammen mit dem Gewicht der durch den Stützmast abgestützten Rohrleitungsanordnung bewirkt, dass ein selbsttätiges Lösen der formschlüssigen Verbindung, nämlich ein Ausklinken oder Ausrasten verhindert wird. Das Verriegelungselement 5 ist jedoch derart ausgebildet, dass unabhängig von der Stellung des Kolbens 6.1 ein passives weiteres Ausziehen des Stützmastes 1 jederzeit möglich ist. Aufgrund der geometrischen Ausgestaltung des Riegelabschnittes 5a kann das Verriegelungselement 5 beim passiven Ausziehen des Stützmastes 1 nach oben mitgeschleppt werden, indem der in die Ausnehmung 8 eingreifende Riegelabschnitt 5a durch die mit dem Ausziehen einhergehende Entlastung des Verriegelungselementes 5 und durch die gleichzeitige Bewegung nach oben aus der Ausnehmung 8 geschwenkt wird. Der Endabschnitt 5' des Verriegelungselementes 5 verliert in dieser Mitschlepp-Position den Kontakt zum Kolben 6.1.

Der Riegelabschnitt 5a des Verriegelungselementes 5 kann in der genannten Mitschlepp-Position bei erneuter Belastung des zweiten, inneren Stützmastelementes 3 sofort und ohne Zeitverzögerung in eine oberhalb angeordnete Ausnehmung 8 eingreifen, beispielsweise wenn eine neue, gewünschte Höhe beim weiteren Ausfahren des Stützmasts 1 erreicht ist. Durch geeignete Anordnung der Ausnehmungen 8, beispielsweise auch durch mehrere, im Wesentlichen parallel zur Hauptachse HA verlaufender aber versetzt zueinander angeordneter Reihen von Ausnehmungen 8 kann eine nahezu stufenlose Arretierung erzielt werden.

Um von dem arretierten Zustand oder Verriegelungszustand der Figur 3b wieder zu einem nicht arretierten Zustand oder Entriegelungszustand der Figur 3a zurückzukehren, ist es zwangsweise erforderlich, dass der Stützmast 1 entlastet und zunächst über einen vorgegebenen Hubweg weiter ausgezogen wird. Dadurch wird auch das Verriegelungselement 5 entlastet und gelangt in die oberhalb beschriebene Mitschlepp-Position ohne Kontakt zum Kolben 6.1, so dass der Kolben 6.1 in Reaktion auf ein ausgegebenes Steuersignal ausgefahren werden kann. Verriegelungselement 5 und Kolben 6.1 sind somit wieder in ihrem Ausgangszustand wie in Figur 3a dargestellt.

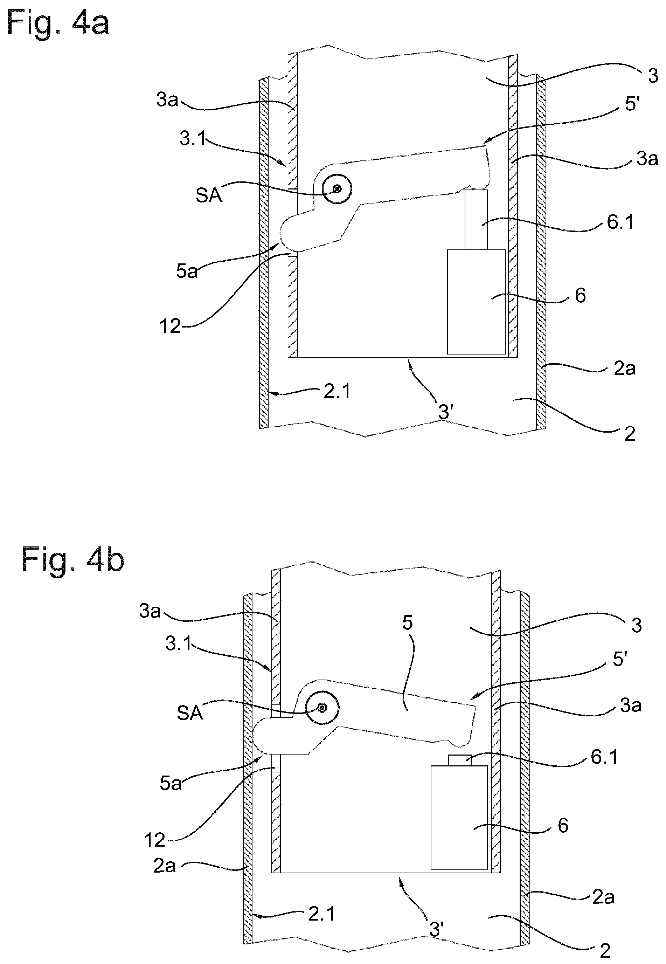

Die Figuren 4a und 4b zeigen in einem Längsschnitt schematisch dargestellt einen Ausschnitt einer weiteren Ausführungsform eines Stützmastes 1 im Bereich der Verriegelungsvorrichtung 4, wobei Figur 4a einen nicht arretierten Zustand bzw. Entriegelungszustand und Figur 4b einen arretierten Zustand bzw. Verriegelungszustand zeigt. Ebenso wie in dem in Figuren 3a und 3b gezeigten Ausführungsbeispiel ist die Verriegelungsvorrichtung 4 des in Figuren 4a und 4b dargestellten Beispiels in einem unteren Abschnitt 3' des zweiten, inneren Stützmastelementes 3 angeordnet und befestigt, wobei die Verriegelungsvorrichtung 4 größtenteils im Inneren des rohrförmigen zweiten, inneren Stützmastelementes 3 angeordnet ist. Der Riegelabschnitt 5a ragt durch die Durchbrechung 12 über die äußere Wandungsoberfläche 3.1 des zweiten, inneren Stützmastelementes 3 hinaus.

Analog zum Beispiel der Figur 3a ist im nicht arretierten Zustand oder Entriegelungszustand der Figur 4a der Riegelabschnitt 5a aufgrund des ausgefahrenen Kolbens 6.1 beabstandet von der Wandung 2a des ersten Stützmastelementes 2 angeordnet. Durch Einfahren des Kolbens 6.1 kann der arretierte Zustand bzw. Verriegelungszustand der Figur 4b herbeigeführt werden, wodurch der dem Riegelabschnitt 5a gegenüberliegende Endabschnitt 5' des Verriegelungselementes 5 der Einfahrbewegung des Kolbens 6.1 folgt, so dass das Verriegelungselement 5 um die Schwenkachse SA derart verschwenkt wird und der Riegelabschnitt 5a in Richtung der Wandung 2a des ersten Stützmastelementes 2 bewegt wird. Der Riegelabschnitt 5a wird dabei an eine innere Wandungsoberfläche 2.1 der Wandung 2a gepresst, wobei der Riegelabschnitt 5a und die innere Wandungsoberfläche 2.1 eine reibschlüssige Verbindung ausbilden. Durch die einwirkende Schwerkraft des zweiten, inneren Stützmastelementes 3 wird der Pressdruck erhöht, so dass ein selbsttätiges Lösen der reibschlüssigen Verbindung verhindert wird. Zur Erhöhung der Reibung kann der Riegelabschnitt 5a beispielsweise aufgeraut sein oder wenigstens teilweise aus einem rauen Material oder einem rutschfesten Material, wie Gummi bestehen.

### Bezugszeichenliste

- 1: Stützmast
- 2: erstes Stützmastelement
- 2': unterer Abschnitt des ersten Stützmastelementes
- 2a: Wandung des ersten Stützmastelementes
- 2.1: innere Wandungsoberfläche der Wandung des ersten Stützmastelementes
- 3: zweites, inneres Stützmastelement
- 3': unterer Abschnitt des zweiten, inneren Stützmastelementes
- 3": oberer Abschnitt des zweiten, inneren Stützmastelementes
- 3a: Wandung des zweiten, inneren Stützmastelementes
- 3.1: äußere Wandungsoberfläche der Wandung des zweiten, inneren Stützmastelementes
- 4: Verriegelungsvorrichtung
- 5: Verriegelungselement
- 5a: Riegelabschnitt
- 5': Endabschnitt
- 6: Betätigungselement
- 6.1: Kolben
- 7: drittes, äußeres Stützmastelement
- 7": oberer Abschnitt des dritten, äußeren Stützmastelementes
- 8: Ausnehmung
- 9: Führungsvorrichtung
- 10: Führungselement
- 10': erstes Ende des Führungselementes
- 10": zweites Ende des Führungselementes
- 11: Umlenkrolle
- 12: Durchbrechung

- HA: Hauptachse
- SA: Schwenkachse

## Patentansprüche

1. Teleskopartig ausziehbarer Stützmast (1) zum Abstützen von Rohr- und/oder Schlauchleitungsanordnungen eines Flugzeugbetankungssystems, aufweisend wenigstens ein rohrförmiges erstes Stützmastelement (2) mit einer Wandung (2a) sowie zumindest ein im ersten Stützmastelement (2) axial entlang einer Hauptachse (HA) verschiebbar aufgenommenes rohrförmiges zweites, inneres Stützmastelement (3) und eine Verriegelungsvorrichtung (4), wobei die Stützmastelemente (2, 3) mittels der Verriegelungsvorrichtung (4) in einem wenigstens teilweise ausgezogenen Zustand gegeneinander arretierbar sind, **dadurch gekennzeichnet, dass** die Verriegelungsvorrichtung (4) zumindest abschnittsweise in dem rohrförmigen zweiten, inneren Stützmastelement (3) angeordnet ist und dass die Verriegelungsvorrichtung (4) zumindest ein um eine Schwenkachse (SA) schwenkbar gelagertes Verriegelungselement (5) und ein Betätigungselement (6) aufweist, wobei zur gegenseitigen Arretierung der Stützmastelemente (2, 3) das in dem zweiten, inneren Stützmastelement (3) befestigte Verriegelungselement (5) mittels einer Verschwenkung um die Schwenkachse (SA) mit der Wandung (2a) des ersten Stützmastelementes (2) eine kraftschlüssige und/oder formschlüssige Wirkverbindung bringbar ist.

2. Stützmast (1) nach Anspruch 1, **dadurch gekennzeichnet, dass** zusätzlich ein rohrförmiges drittes, äußeres Stützmastelement (7) vorgesehen ist, wobei das erste Stützmastelement (2) in dem dritten, äußeren Stützmastelement (7) axial entlang der Hauptachse (HA) verschiebbar aufgenommen ist.

3. Stützmast (1) nach Anspruch 2, **dadurch gekennzeichnet, dass** zusätzlich eine Führungsvorrichtung (9) vorgesehen ist, wobei die Führungsvorrichtung (9) wenigstens eine Umlenkrolle (11) sowie ein um die Umlenkrolle (11) geführtes, langgestrecktes, band- oder seilförmiges Führungselement (10) umfasst, wobei das Führungselement (10) an einem ersten Ende (10') mit einem oberen Abschnitt (7") des dritten, äußeren Stützmastelementes (7) und an einem zweiten Ende (10") mit einem unteren Abschnitt (3') des zweiten, inneren Stützmastelementes (3) verbunden ist und wobei die Umlenkrolle (11) an einem unteren Abschnitt (2') des ersten Stützmastelementes (2) befestigt ist.

4. Stützmast (1) nach einem der Ansprüche 1 bis 3, **dadurch gekennzeichnet, dass** die Verriegelungsvorrichtung (4) im unteren Abschnitt (3') des zweiten, inneren Stützmastelementes (3) angeordnet und befestigt ist, wobei der untere Abschnitt (3') des zweiten, inneren Stützmastelementes (3) sowohl im eingeschobenen, als auch im teilweise oder ganz ausgezogenen Zustand des Stützmasts (1) im ersten Stützmastelement (2) aufgenommen und von diesem hülsenartig umgeben ist.

5. Stützmast (1) nach einem der vorhergehenden Ansprüche, **dadurch gekennzeichnet, dass** das schwenkbar gelagerte Verriegelungselement (5) in Form eines Kipphebels mit einem über eine äußere Wandungsoberfläche (3.1) einer Wandung (3a) des zweiten, inneren Stützmastelementes (3) herausragenden Riegelabschnitt (5a) ausgebildet ist, wobei der Riegelabschnitt (5a) mit einer inneren Wandungsoberfläche (2.1) der Wandung (2a) des ersten Stützmastelementes (2) eine reibschlüssige Verbindung ausbildet oder formschlüssig in eine dafür vorgesehene Ausnehmung (8) in der Wandung (2a) des ersten Stützmastelementes (2) eingreift.

6. Stützmast (1) nach einem der vorhergehenden Ansprüche, **dadurch gekennzeichnet, dass** das Betätigungselement (6) der Verriegelungsvorrichtung (4) in Form eines Aktuators, insbesondere in Form eines steuerbaren pneumatischen Zylinders ausgebildet ist.

7. Stützmast (1) nach einem der vorhergehenden Ansprüche, **dadurch gekennzeichnet, dass** an einem oberen Abschnitt (3") des zweiten, inneren Stützmastelementes (3) eine Haltevorrichtung für die Rohrleitungsanordnungen eines Flugzeugbetankungssystems vorgesehen ist.

8. Stützmast (1) nach einem der vorhergehenden Ansprüche, **dadurch gekennzeichnet, dass** kein separater Antrieb zum Ausziehen des Stützmastes (1) vorgesehen ist und der Stützmast passiv mittels einer Hebebühne ausziehbar ist, wobei am oberen Abschnitt (3") des zweiten, inneren Stützmastelementes (3) ein Verbindungsstück für den Eingriff der Hebebühne vorgesehen ist.

9. Stützmast (1) nach einem der vorhergehenden Ansprüche, **dadurch gekennzeichnet, dass** das Verriegelungselement (5) derart ausgebildet und eingerichtet ist, dass der Stützmast (1) bis zu einem vorgegebenen maximalen ausgezogenen Zustand passiv ausziehbar ist, und zwar unabhängig von einer Ausschwenkposition des Verriegelungselementes (5).

10. Stützmast (1) nach einem der vorhergehenden Ansprüche, **gekennzeichnet durch** seine Ausbildung zur Aufnahme eines Pantographen eines Flugzeugbetankungssystems.
